# EUROPEAN PATENT APPLICATION

(11) **EP 2 236 992 A1**
(43) Date of publication of application: **06.10.2010**
(21) Application number: 09157169.5
(22) Date of filing: 02.04.2009
(51) Int. Cl.: G01F 1/66, G01F 15/14

(54) **Ultrasonic flow meter capsule**

(71) Applicant: KAMSTRUP A/S, 8660 Skanderborg (DK)
(72) Inventor: Laursen, Peter Schmidt, 8660, Skanderborg (DK); Skallebæk, Anders, 8660, Skanderborg (DK)
(74) Representative: Plougmann & Vingtoft A/S

(57) **Abstract**

An ultrasound flow meter capsule arranged for use with an associated base part 1 with fittings for connections to inlet and outlet pipes. The capsule includes a housing 2. A measuring tube 3 is arranged inside the housing for flow of fluid. Two ultrasound transducers 12, 13 are arranged in relation to the measuring tube 3 to transmit and receive an ultrasound signal through the fluid in the measuring tube 3. A monolithic pressure carrying part is arranged outside the measuring tube 3, and the ultrasound transducers 12, 13 are arranged outside this monolithic pressure carrying part. The pressure carrying part is preferably integrated with the housing 2, thus forming one single pressure carrying housing 2, e.g. formed by injection moulding of polymeric material. The pressure carrying housing 2 is then arranged for fitting together with a measuring tube element 3 that can also be an injection moulded polymeric element. The flow preferably flows in one single direction in the measuring tube 3. The ultrasound transducers can both be placed on sides of the measuring tube, or one 12 on the side and one 13 on the end of the measuring tube 3. The housing preferably accommodates a display element 16, electronic circuits on a PCB 15, and batteries 14.

## Description

### FIELD OF THE INVENTION

The invention relates to an ultrasound flow meter capsule arranged for mounting on a base part, such as a base part with a standardized shape.

### BACKGROUND OF THE INVENTION

Capsule-type flow meters are well known and used in e.g. households for measuring the volume of fresh water consumption. Traditionally, mechanical flow meter types have been used, where the consumption has been registered by a rotating mechanism connected to a mechanical counter for consumption monitoring. With the development of flow meters based on ultrasound technology advantageous features such as remote reading and tampering protection can be adopted into the capsule type flow meters, which alongside with the improved precision of the ultrasound technology measuring is the base of this invention.

Reading of mechanical capsule type flow meters is to be performed manually; remote reading is not possible since no electrical signals are present to be transferred by wire or radio systems. An electrical signal representing the measured consumption can be obtained by using a flow meter based on ultrasound technology, which can be transmitted by radio or wired connection to a central calculation unit for billing purposes. This is a standard option in modern flow meters for e.g. remote heating systems.

A very large number of installations based on the capsule-type mechanical type flow meters are present, and numerous suppliers of the mechanical type flow meters exists. The installation is based on a circular shaped base part, which is inserted in the piping system carrying the fluid flow. Into the base part the mechanical flow meter is mounted by a threaded union that presses the flow meter housing against a seal making the assembly water proof. In many cases the piping and the base part is hidden inside a wall, or a layer of plaster has been applied to the wall, covering both the piping and the base part of the capsule-type flow meter.

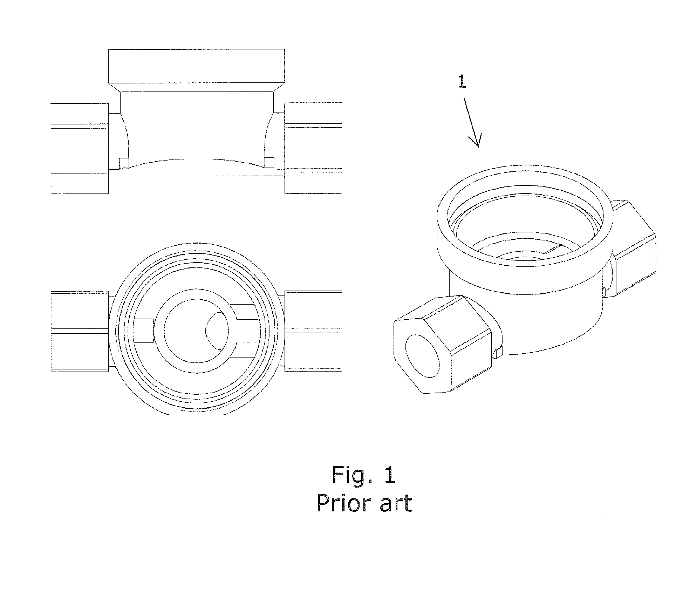

The base part is in many ways standardised but some features decided by the manufacturer of the part. This invention is made universal to some extent, since it deals only with the type of base parts that has a central, vertical directed outlet as seen on figure 1. Other variants are not having a central, vertical directed outlet but a symmetrical layout with inlet and outlet on the same axis as the connection threads at the base part studs.

DE 10 2005 001 897 B4 discloses an example of an ultrasonic flow measurement capsule adapted for fitting to a standard base part. The disclosed capsule has two top-mounted ultrasound transducers serving to transmit ultrasound signals from ends of the measuring the measuring tube which is arranged perpendicular to a direction of flow in the base part. The measuring tube is bent such that the flow in the measuring tube flow towards the base part in a first part, while in a second part of the measuring tube, the flow direction is away from the base part. The measuring tube is formed by metal, and in the bending, the metal wall of the measuring tube serves to reflect ultrasound signals travelling from the first part to the second part of the measuring tube.

Disadvantages of the capsule disclosed in DE 10 2005 001 897 B4 are that the top-mounted transducers occupy space that cause the total height of the capsule to be significant. Further, the bent measuring tube in a central part of the housing occupies space in the width dimension of the capsule. Even further, the metal housing requires an opening for the ultrasound transducers, such opening being vulnerable to leakages and is complex to handle during manufacturing.

### SUMMARY OF THE INVENTION

It may be seen as an object of the present invention to provide an ultrasonic based flow measurement capsule arranged for mounting on a corresponding base part. The measurement capsule preferably has a measuring tube with sufficient length to provide precise flow measurements, and at the same time the capsule preferably has compact dimensions. Further, the capsule preferably is easy and economical to manufacture in automated mass production.

In a first aspect, the invention provides an ultrasound flow meter capsule arranged for ultrasonic measurement of fluid flow when mounted on an associated base part with fittings for connections to an inlet pipe and an outlet pipe, the ultrasound flow meter capsule including
- a housing,
- a measuring tube arranged inside the housing for flow of fluid between a flow inlet and a flow outlet, and
- first and second ultrasound transducers arranged in relation to the measuring tube so as to transmit and receive an ultrasound signal through the fluid in the measuring tube,
wherein a monolithic pressure carrying part is arranged outside the measuring tube, and wherein the first and second ultrasound transducers are arranged outside the monolithic pressure carrying part.

The use of a monolithic pressure carrying part arranged outside the measuring tube allows a compact capsule with the ultrasound transducers arranged directly on a wall of the monolithic pressure carrying part, thus eliminating leakages in openings for the ultrasound transducer. The presence of the monolithic pressure carrying element allows manufacturing with only few single components, which therefore facilitates handling during the manufacturing process.

In preferred embodiments, at least the monolithic pressure carrying part is formed by a polymeric material, thus allowing penetration of ultrasound signals with low attenuation.

The measuring tube may be arranged substantially perpendicular to a plane defined by the base part, such as perpendicular to a direction of flow between inlet and outlet of the base part. Especially, the measuring tube may be arranged in a central part of the housing.

Preferably, the first ultrasound transducer is positioned to transmit the ultrasound signal through one part of the sidewall of the measuring tube, such as positioned outside a wall of the monolithic pressure carrying element. The second ultrasound transducer may then be positioned to transmit the ultrasound signal through another part of the sidewall of the measuring tube, such as positioned outside another part of the wall of the monolithic pressure carrying element. With both transducers positioned to transmit ultrasound signals through different parts of the sidewall of the measuring tube, and with the measuring tube arranged perpendicular to the base part, a capsule with a low height can be obtained. However, typically two ultrasound reflectors will be needed.

In some embodiments, the first ultrasound transducer is positioned to transmit the ultrasound signal in a direction parallel with the measuring tube. Especially, the first ultrasound transducer is positioned at one end of the measuring tube, such as an end opposite the base part. Such embodiment allows a good utilization of the full length of the measuring tube, and only one single ultrasound reflector is required.

In preferred embodiment, the fluid flows in one single main direction in the measuring tube between the first and second transducer, e.g. a direction towards the base part. Thus, preferably the measuring tube has the form of a simple straight tubular element.

Preferably, the housing and the monolithic pressure carrying part is formed as one integral part, e.g. in the form of one single injection moulded part. Hereby, the number of single components of the capsule can be kept very low, thus facilitating assembly during the manufacturing process. Likewise, the measuring tube is preferably also formed as one element, e.g. in the form of a single injection moulded element arranged for insertion into the monolithic pressure carrying part of the housing. Especially, the measuring tube may have a substantially circular cross section and is arranged for concentric mounting inside the monolithic pressure carrying part of the housing. Preferably, the housing, the monolithic pressure carrying part, and the measuring tube are all made of a polymeric material. Thus, all parts can be formed by injection moulding of a polymeric material, which is a method suited for low cost mass production.

The housing may include a flange on its outer surface arranged for engagement with one end of a fitting element, such as a union, the opposite end of the fitting element being shaped for connection with the base element. With such flange on the housing arranged for facing an end of a fitting element, it is possible to adapt the capsule to base parts with different depths, simply by means of different fitting elements, e.g. formed by metal or polymeric materials.

The capsule preferably includes a display element arranged for displaying a value representing a measured volume of fluid, wherein the display element is arranged within the housing, preferably in a top part of the housing, and wherein the display element is arranged for being turned in relation to the base part. Hereby, it is possible to turn the display to allow easy reading irrespective of the actual direction in which the capsule is to be mounted. Especially, the element forming the measuring tube constitutes a central part of the capsule around which the housing including the display element and preferably also electronic components and battery can be turned.

In a second aspect, the invention provides a consumption meter including an ultrasound flow meter capsule according to the first aspect, such as a water meter or a gas meter. However, the consumption meter may also be a heat meter or a cooling meter.

In a third aspect, the invention provides a method of manufacturing an ultrasound flow meter capsule arranged for ultrasonic measurement of fluid flow when mounted on an associated base part with fittings for connections to an inlet pipe and an outlet pipe, the method including
- forming, such as by injection moulding a polymeric material, a housing part with a monolithic pressure carrying part,
- forming, such as by injection moulding a polymeric material, a measuring tube part,
- arranging the measuring tube part inside the monolithic pressure carrying part of the housing part, and
- arranging first and second ultrasound transducers outside the monolithic pressure carrying part of the housing part.

It is appreciated that advantages described for the first aspect applies as well for the second and third aspects. Further, embodiments of the first aspects may in any way be combined with the second and third aspect.

### BRIEF DESCRIPTION OF THE DRAWINGS

Embodiments of the invention will be described, by way of example only, with reference to the drawings, in which
Fig. 1 illustrates a base part as an example of a base part which fits the flow meter capsule to be described in the following as embodiments of the invention,
Fig. 2 illustrates an exploded assembly drawing of one capsule embodiment,
Fig. 3 illustrates details of the key components of the embodiment of Fig. 2,
Fig. 4 illustrates a cut of the key components of Fig. 3,
Fig. 5 illustrates details regarding arrangement of the ultrasound transducers,
Fig. 6 shows the appearance of an assembled embodiment when mounted on a base part,
Fig. 7 shows a side view and a section view of one embodiment mounted on a base part, thus visualising the fluid flow through the flow meter, and
Fig. 8 shows an upper view and a section view of the embodiment of Fig. 7.

### DETAILED DESCRIPTION OF THE INVENTION

Fig. 1 only serves to illustrate different views of an example of a standardized base part 1 which fits with the flow meter capsule embodiment which will be described in the following.

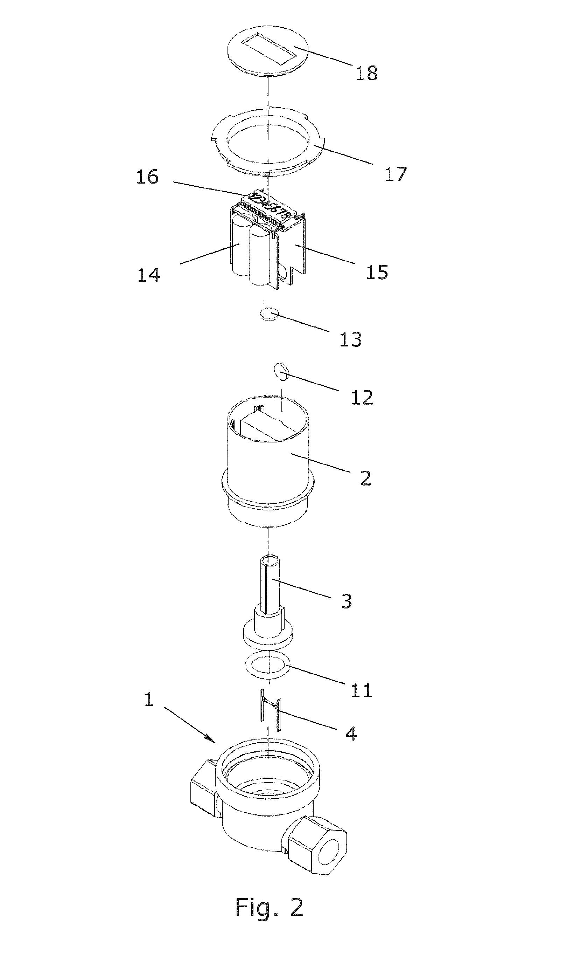

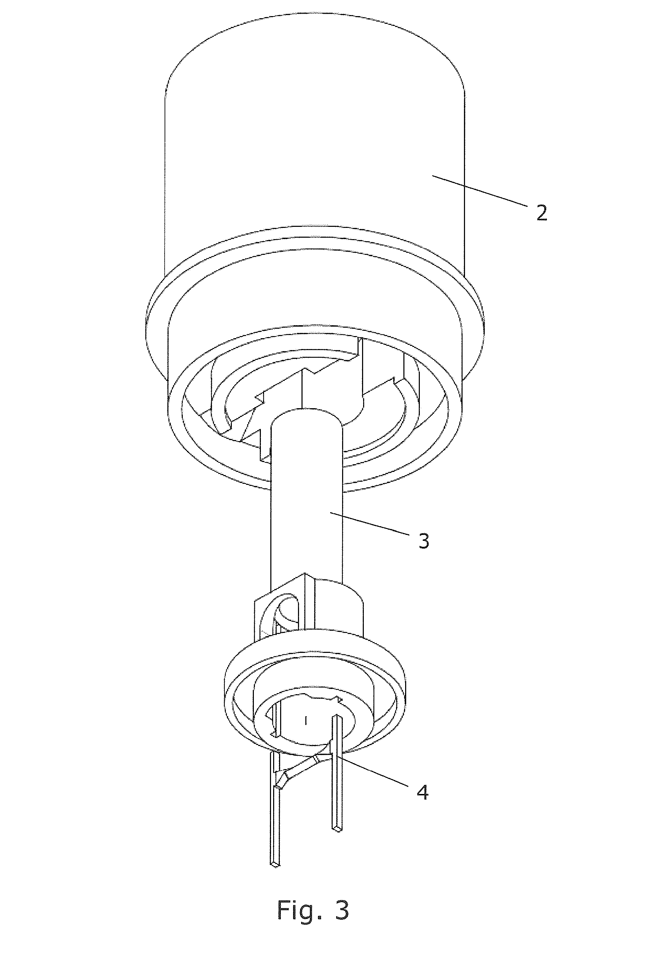

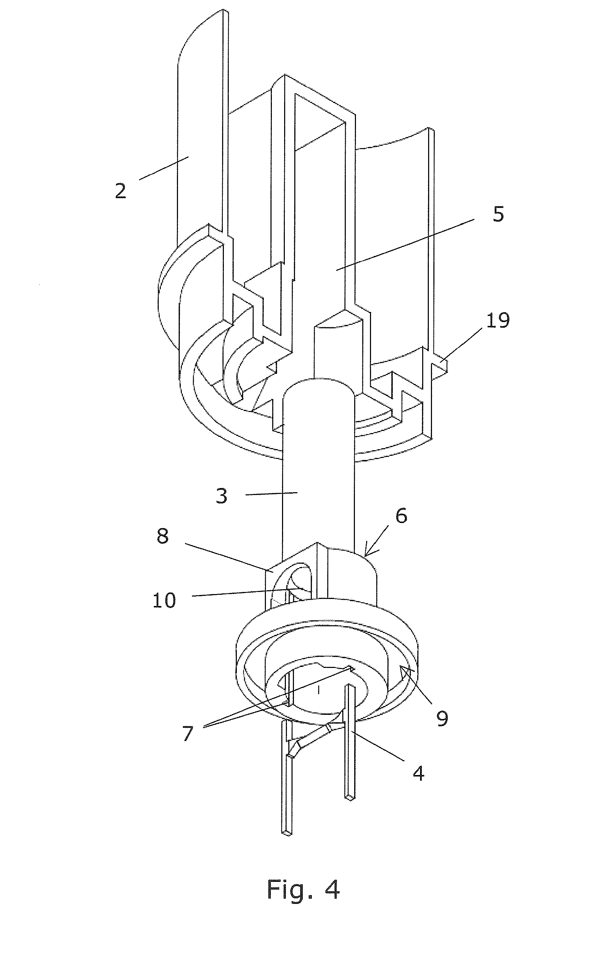

Figs. 2-4 show different illustrations of one capsule-type flow meter embodiment and its associated base part 1. The flow meter is based on two injection moulded polymeric main parts: 1) a measuring tube element 3 placed vertically directly on top of the central, vertical directed outlet, and 2) a housing 2 with an integrated monolithic pressure carrying element that thus forms a pressure carrying housing 2. The description in the following refers to all of Figs. 2-4.

The measuring tube element 3 has a mainly circular shaped cross section, with a square tongue part 8 fitting a matching groove in the pressure carrying housing 2 that prevents misalignment. The measuring tube inside the measuring tube element 3 is a well defined circular geometry along the entire length of the element 3, with a groove 7 of its lower end for sliding in a reflector 4. The opening 10 in the measuring tube element 3 is used for positioning one ultrasound transducer 12, while another ultrasound transducer 13 is positioned at the end of the measuring tube, i.e. on a flat portion of an inner part of the pressure carrying housing 2.

The pressure carrying housing 2 is a monolithic part that is both used to lead the fluid flow through the measuring tube of the measuring tube element 3, but due to the rather small measuring tube, the housing also includes space for batteries 14, a Printed Circuit Board (PCB) 15 with measurement circuits, and a display element 16. Batteries 14 are placed vertically, and the PCB 15 is placed vertical on the opposite side of the batteries 14. In the shown embodiment, the PCB 15 accommodates ultrasound transducer 12 through an opening in the PCB, however other variants may be chosen, where the ultrasound transducer 12 is positioned away from the PCB. This transducer 12 operates through the opening 10 in the measuring tube element 3. A second ultrasound transducer 13 is placed underneath the display 16, aligned on the central axis of measuring channel element 3. On top of the display 16 a cover plate 18 is clicked into the pressure carrying housing 2 to apply finish to the capsule-type flow meter.

Using a flange 19 on an outer surface of the pressure carrying housing 2, a union 17 is fixing the pressure carrying housing 2 in the associated base part 1. Since the depth of the base part 1 varies from manufacturer to manufacturer, the distance from the top plane of the central, vertical directed outlet of the base part 1 to the thread on the inner side of the circular wall of the base part 1 can differ. Since the position of the flange 19 on the pressure carrying housing 2 is fixed, the height dimension of the union 17 must be made varied to fit all base part models. This is done by manufacturing a limited number of different unions 17 and fitting elements or spacers (not shown), that are used to match the distance gap between union 17 and flange 19. The spacers can be made of metal or a polymeric material and has a cylindrical shape. The union 17 may be manufactured in different models to fit the variation of the different base parts on the market. The different models are mainly referring to the height of the union 17. On some base part types a metric thread is used on the inner side of the base part circular wall, while on others a Whitworth type thread is applied. Thus, to handle this, different types of unions 17 fitting for the right thread can be manufactured.

During manufacturing, the measuring tube element 3 is slid into the pressure carrying housing 2 until the recess plane 6 of the measuring tube element 3 meets the recess plane 5 of the pressure carrying housing 2. An O-ring 11 is placed in the recess 9 of the measuring tube element 3, sealing against the top plane of the central, vertical directed outlet of the base part 1. When the pressure carrying housing 2 is pressed towards the base part 1, the O-ring 11 is compressed and thus seals connection between the base part 1 and the flow meter capsule.

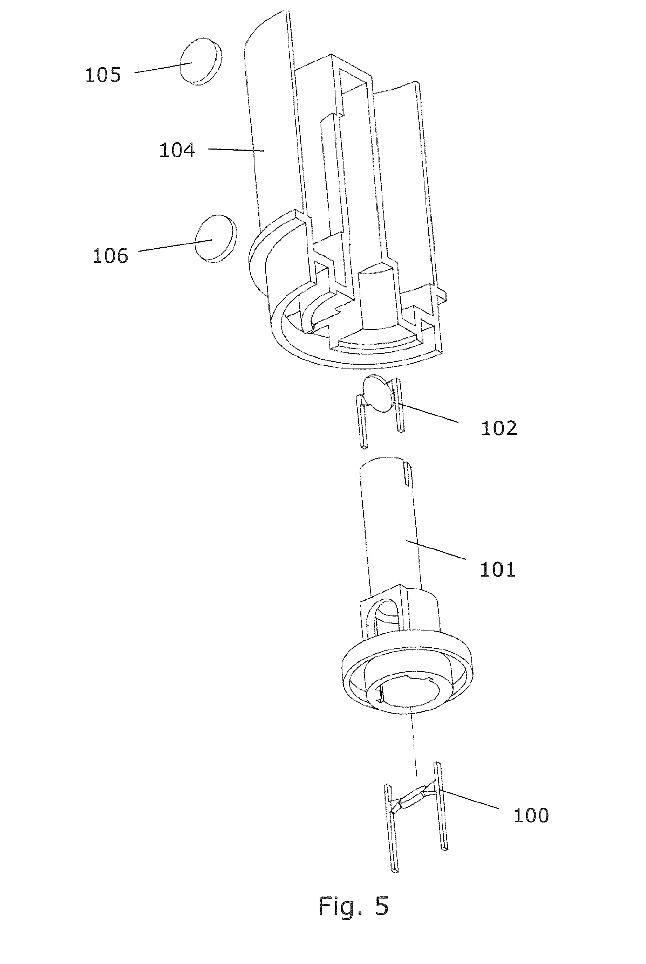

Fig. 5 shows an embodiment of the working principle of the invention, where a reflector 100 is inserted into the measuring tube element 101, such as previously described, but another reflector 102 is also slid into the measuring tube element 101 from the opposite side to produce a U-shaped measurement path between the ultrasound transducers 105 and 106. The pressure carrying housing 104 is designed to include both ultrasound transducers from the same side. The advantages by this design could be better flow properties at the inlet of the measuring tube, more compact dimensions since the height can be reduced with the height of the ultrasound transducer that has been moved to the side of the measurement channel 101 - in contrast to the embodiment of Fig. 2 - and a common platform for the two ultrasound transducers 105 and 106 through the PCB (not shown) that could be designed to accommodate both ultrasound transducers.

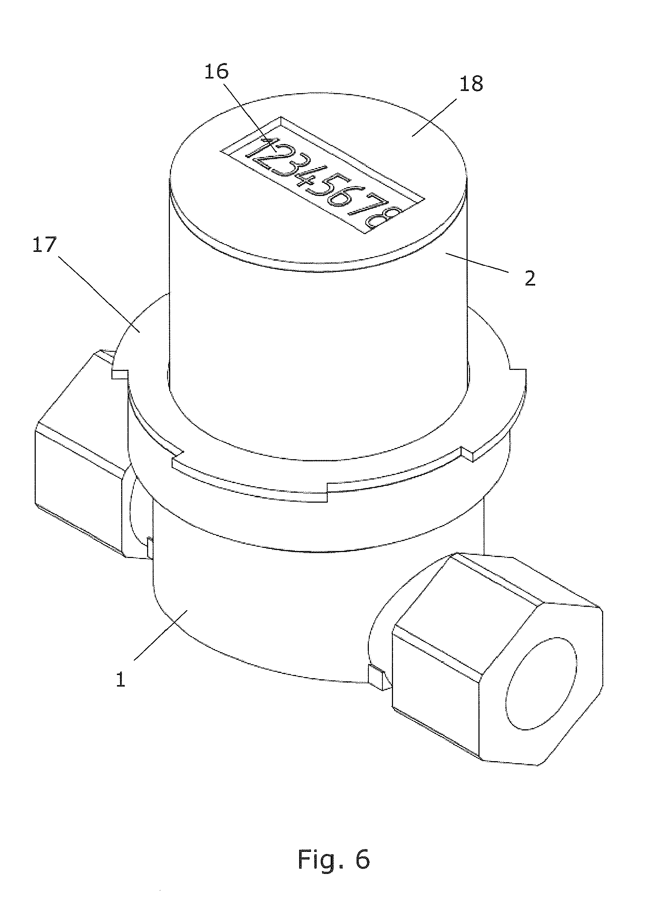

Fig. 6 shows the appearance of the assembled capsule-type ultrasound flow meter, where the display 16 is seen under the cover 18, and the pressure carrying housing 2 is seen as a cylindrical part fastened to the base part 1 by the union 17. Since the interfaces of the pressure carrying housing 2 are rotational symmetric, the angle of the display relative to the base part 1 is decided when fastening the union 17, and as such up to the installer to decide.

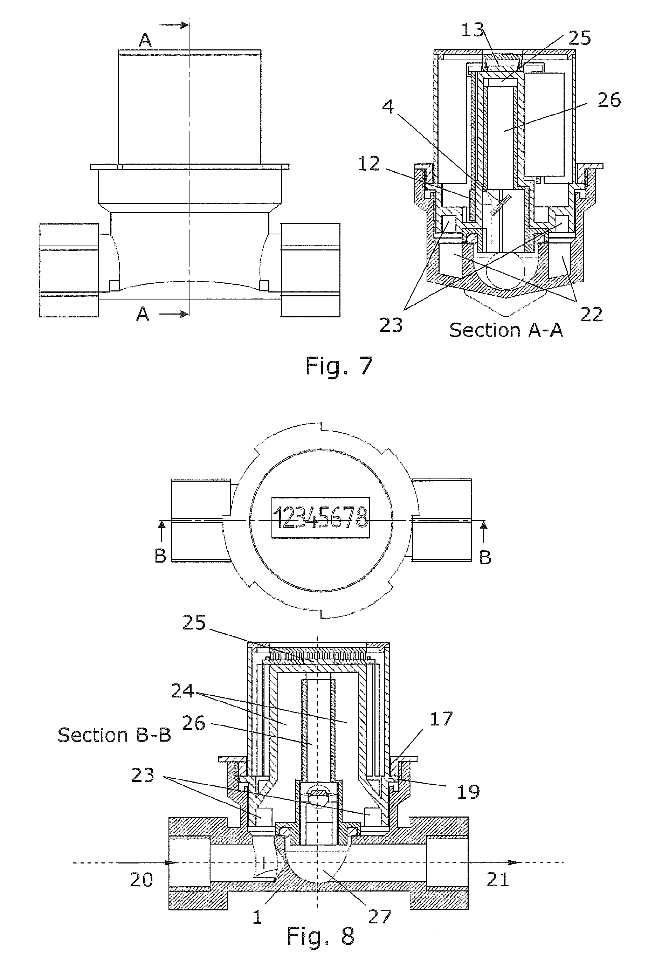

Figs. 7 and 8 illustrate the capsule-type flow meter working principle using cross section drawings of one embodiment. In Fig. 8 the flow direction in the base part 1 is from left to right, illustrated by inlet at 20 and outlet at 21. From inlet 20 the fluid is directed into cavity 22 of the base part 1, from where it is led upwards through the bottom part 23 of the pressure carrying housing 2, onwards through the channels 24 to the top section 25 of the pressure carrying housing 2 through the inner side of the measuring tube 26 to the outlet cavity 27 of the base part 1. A measurement path is established between ultrasound transducers 12 and 13 through reflector 4 as seen on Fig. 7.

In Fig. 8 dashed lines are used to illustrate axes through the flow direction in the base part 1, and through the measuring tube 26, respectively. As seen, the measuring tube 26 is perpendicular to the axis through the flow direction in the base part. Further, it is seen that the measuring tube 26 constitutes a central part of the capsule, concentrically positioned in relation to the pressure carrying housing.

To sum up, the invention provides an ultrasound flow meter capsule arranged for use with an associated base part 1 with fittings for connections to inlet and outlet pipes. The capsule includes a housing 2. A measuring tube 3 is arranged inside the housing for flow of fluid. Two ultrasound transducers 12, 13 are arranged in relation to the measuring tube 3 to transmit and receive an ultrasound signal through the fluid in the measuring tube 3. A monolithic pressure carrying part is arranged outside the measuring tube 3, and the ultrasound transducers 12, 13 are arranged outside this monolithic pressure carrying part. The pressure carrying part is preferably integrated with the housing 2, thus forming one single pressure carrying housing 2, e.g. formed by injection moulding of polymeric material. The pressure carrying housing 2 is then arranged for fitting together with a measuring tube element 3 that can also be an injection moulded polymeric element. The flow preferably flows in one single direction in the measuring tube 3. The ultrasound transducers can both be placed on sides of the measuring tube, or one 12 on the side and one 13 on the end of the measuring tube 3. The housing preferably accommodates a display element 16, electronic circuits on a PCB 15, and batteries 14.

In the claims, the terms "comprising" or "including" do not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Reference signs are included in the claims however the inclusion of the reference signs is only for clarity reasons and should not be construed as limiting the scope of the claims.

## Claims

**1.** An ultrasound flow meter capsule arranged for ultrasonic measurement of fluid flow when mounted on an associated base part with fittings for connections to an inlet pipe and an outlet pipe, the ultrasound flow meter capsule including
- a housing (2),
- a measuring tube (3) arranged inside the housing (2) for flow of fluid between a flow inlet and a flow outlet, and
- first and second ultrasound transducers (12, 13) arranged in relation to the measuring tube (3) so as to transmit and receive an ultrasound signal through the fluid in the measuring tube (3),
wherein a monolithic pressure carrying part is arranged outside the measuring tube (3), and wherein the first and second ultrasound transducers (12, 13) are arranged outside the monolithic pressure carrying part.

**2.** Ultrasound flow meter capsule according to claim 1, wherein the measuring tube (3) is arranged substantially perpendicular to a plane defined by the base part (1), such as perpendicular to a direction of flow between inlet (20) and outlet (21) of the base part (1).

**3.** Ultrasound flow meter capsule according to claim 1 or 2, wherein the first ultrasound transducer (12) is positioned to transmit the ultrasound signal through a part of the sidewall of the measuring tube.

**4.** Ultrasound flow meter capsule according to claim 3, wherein the second ultrasound transducer is positioned to transmit the ultrasound signal through another part of the sidewall of the measuring tube.

**5.** Ultrasound flow meter capsule according to any of the preceding claims,
wherein the first ultrasound transducer (13) is positioned to transmit the ultrasound signal in a direction parallel with the measuring tube (3), such as the first ultrasound transducer (13) being positioned at one end of the measuring tube (3), such as an end opposite the base part (1).

**7.** Ultrasound flow meter capsule according to any of the preceding claims, including one or more ultrasound reflectors (4) arranged to reflect the ultrasound signal between the first and second transducers (12, 13).

**8.** Ultrasound flow meter capsule according to any of the preceding claims,
wherein the fluid flows in one single main direction in the measuring tube (3) between the first and second transducer (12, 13), such as one single main direction being towards the base part (1).

**9.** Ultrasound flow meter capsule according to any of the preceding claims,
wherein the housing and the monolithic pressure carrying part is formed as one integral part (2), such as an injection moulded part.

**10.** Ultrasound flow meter capsule according to claim 9, wherein the measuring tube is formed as one element (3), such as an injection moulded element, arranged for insertion into the monolithic pressure carrying part of the housing (2).

**11.** Ultrasound flow meter capsule according to claim 9 or 10, wherein the measuring tube (3) has a substantially circular cross section and is arranged for concentric mounting inside the monolithic pressure carrying part of the housing (2).

**12.** Ultrasound flow meter capsule according to claim 11, wherein all of: the housing (2), the monolithic pressure carrying part, and the measuring tube (3) are made of a polymeric material.

**13.** Ultrasound flow meter capsule according to any of the preceding claims,
wherein the housing (2) includes a flange (19) on its outer surface arranged for engagement with one end of a fitting element (17), such as a union, the opposite end of the fitting element (17) being shaped for connection with the base part (1).

**14.** Ultrasound flow meter capsule according to any of the preceding claims, including a display element (16) arranged for displaying a value representing a measured volume of fluid, wherein the display element (16) is arranged within the housing (2), and wherein the display element (2) is arranged for being turned in relation to the base part (1).

**15.** Consumption meter including an ultrasound flow meter capsule according to any of claims 1-14, such as a water meter, a gas meter, a heating meter, and a cooling meter.

**16.** Method of manufacturing an ultrasound flow meter capsule arranged for ultrasonic measurement of fluid flow when mounted on an associated base part (1) with fittings for connections to an inlet pipe and an outlet pipe, the method including
- forming, such as by injection moulding a polymeric material, a housing part (2) with a monolithic pressure carrying part,
- forming, such as by injection moulding a polymeric material, a measuring tube part (3),
- arranging the measuring tube part (3) inside the monolithic pressure carrying part of the housing part (2), and
- arranging first and second ultrasound transducers (12, 13) outside the monolithic pressure carrying part of the housing part (2).
